# EUROPÄISCHE PATENTANMELDUNG

(11) **EP 0 997 184 A1**
(43) Veröffentlichungstag der Anmeldung: **03.05.2000**
(21) Anmeldenummer: 98118684.4
(22) Anmeldetag: 02.10.1998
(51) Int. Cl.: B01F 13/02

(54) **Vorrichtung zum Fördern und Mischen von Schüttgut**

(71) Anmelder: Mann + Hummel ProTec GmbH, 71636 Ludwigsburg (DE)
(72) Erfinder: Brandauer, Otto, 75417 Mühlacker (DE)
(74) Vertreter: Voth, Gerhard, Dipl.-Ing.

(57) **Zusammenfassung**

Die Erfindung betrifft eine Vorrichtung zum Fördern und Mischen von Schüttgut, bei der mittels einer Saugfördereinrichtung jeweils eine Schüttgutkomponente durch einen Materialeinlaufrohr (6) in den Bodenbereich eines Schüttgutbehälters (1,2) gelangt. Das Materialeinlaufrohr (6) ist in einem vorgegebenen Bereich innerhalb des Schüttgutbehälters (1,2) mit einem Außenrohr (12) umgeben ist, so dass zwischen dem Materialeinlaufrohr (6) und dem Außenrohr (12) eine Materialströmung des Schüttgutes vom Bodenbereich des Schüttgutbehälters (1,2) in Richtung der Saugfördereinrichtung bewirkbar ist.

## Beschreibung

### Stand der Technik

Die Erfindung betrifft eine Vorrichtung zum Fördern und Mischen von Schüttgut nach der Gattung des Hauptanspruchs und eine Anwendung der Vorrichtung.

Es ist bereits eine Vorrichtung zum Fördern und Mischen von Schüttgut aus der DE 40 29 902 A1 bekannt, bei der das Schüttgut über eine Saugfördereinrichtung in einen Schüttgutbehälter gefördert wird. Diese bekannte Fördervorrichtung ist dazu geeignet, mehrere Schüttgutkomponenten während Förderung in den Schüttgutbehälter gleichzeitig zu dosieren und zu mischen. Hierzu ist ein Materialeinlaufrohr vorhanden, durch das die jeweilige Schüttgutkomponenten nacheinander in den Schüttgutbehälter gelangen, wobei das Materialeinlaufrohr bis in die Nähe des Bodens des Schüttgutbehälters geführt ist.

Auf Grund der oben im Schüttgutbehälter angeordneten Saugfördereinrichtung wird das jeweils laufende Schüttgut im Schüttgutbehälter zu einer Aufwärtsströmung veranlasst, wodurch das bereits im Schüttgutbehälter angelangte Schüttgut durchmischt wird. Diese bekannte Vorrichtung eignet sich insbesondere für kleinere Schüttgutbehälter, wobei bei größeren Behältern in der Regel der einströmende Luftstrom nicht mehr ausreicht, um die eingeförderten Schüttgutpartikel in der gewünschten Art und Weise zu aktivieren.

### Aufgabenstellung

Der Erfindung liegt die Aufgabe zugrunde, eine Vorrichtung der eingangs genannten Art so auszubilden, dass auch bei größeren Schüttgutbehältern eine optimale Durchmischung des Schüttgutes gewährleistet ist.

### Vorteile der Erfindung

Die erfindungsgemäße Vorrichtung ist in vorteilhafter Weise geeignet, ausgehend von der gattungsgemäßen Art, die gestellte Aufgabe mit den kennzeichnenden Merkmalen des Hauptanspruchs zu lösen. Dadurch, dass bei der eingangs genannten Vorrichtung zum Fördern und Mischen von unterschiedlichen Schüttgutkomponenten erfindungsgemäß ein Doppelrohr gebildet ist, mit einem Außenrohr um das Materialeinlaufrohr, kann in vorteilhafter Weise eine besondere, die Vermischung unterstützende Materialströmung hervorgerufen werden.

In dem Bereich zwischen dem Materialeinlaufrohr und dem Außenrohr wird somit eine Materialströmung des Schüttgutes vom Bodenbereich des Behälters in Richtung der Saugfördereinrichtung erzwungen, die eine Förderung von Teilen des Schüttgutes aus dem Bodenbereich nach oben besonders unterstützt und damit die Mischintensität der jeweils unterschiedlichen Schüttgutkomponenten steigert. Das Materialeinlaufrohr und das Außenrohr sind hierbei bevorzugt im wesentlichen senkrecht und konzentrisch im Schüttgutbehälter angeordnet.

Eine weitere Verbesserung der Mischintensität kann auf einfache Weise durch ein angepasstes Verschieben des Außenrohrs in einem vorgegebenen Bereich auf dem Materialeinlaufrohr erreicht werden, insbesondere in Abhängigkeit von der Beschaffenheit des jeweiligen Schüttgutes.

Der Mischprozess kann auch in vorteilhafter Weise dadurch intensiviert werden, dass durch eine Erhöhung der Saugluftmenge, beispielsweise durch eine Drehzahlerhöhung des Gebläses in der Saugfördereinrichtung eine stärkere Materialströmung im Bereich zwischen dem Materialeinlaufrohr und dem Außenrohr erzeugt wird.

Ein besseres Materialströmungsverhalten und damit auch eine weiters Verbesserung des Mischprozesses wird dadurch auf einfache Weise ermöglicht, das das Außenrohr am unteren Ende einen zusätzlichen Konus aufweist, welcher das Abströmen der Luft in die umgebenden Bereiche des Schüttgutes behindert und damit im wesentlichen die Materialströmung zwischen dem Materialeinlaufrohr und dem Außenrohr konzentriert.

Weitere vorteilhafte Ausführungsformen sind in den Unteransprüchen angegeben, insbesondere sind vorteilhafte Anwendungen für die Materialzufürung zu Kunststoffspritzgießmaschinen oder Extrudern vorgeschlagen.

### Zeichnung

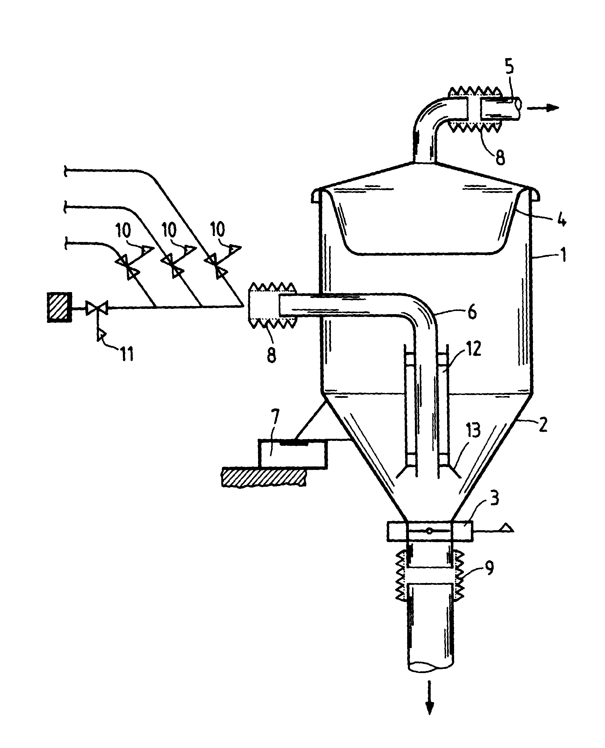

Ein Ausführungsbeispiel der erfindungsgemäßen Vorrichtung zum Fördern und Mischung von Schüttgütern wird anhand der Figur der Zeichnung erläutert.

### Beschreibung des Ausführungsbeispiels

In der Figur der Zeichnung ist ein Schüttgutbehälter zum Fördern und zur dosiertem Mischung von Schüttgutkomponenten mit einem oberen zylindrischen Teil 1 und einem konischen Unterteil 2 dargestellt. Am unteren Ende des konischen Unterteils 2 ist eine, zum Beispiel elektro-pneumatisch betätigte Auslaufklappe 3 zur Entleerung des Schüttgutbehälters 1,2 angeordnet. Im oberen Teil 1 des Schüttgutbehälters befindet sich ein Filter 4 zur Abtrennung des einströmenden Schüttgutmaterial-Luftgemischs im Innenraum.

Die abgereinigte Saugluft zur Bewerkstelligung der Saugförderung wird über eine Reinluftleitung 5 von einem hier nicht dargestellten Gebläse, das Bestandteil einer Saugfördereinrichtung ist, angesaugt. Ein Gemisch aus dem somit angesaugten Schüttgutmaterial und der Saugluft wird über ein Materialeinlaufrohr 6 von verschiedenen Vorratsbehältern in den Schüttgutbehälter 1,2 eingesaugt. Zur Verwiegung dieser einzelnen Schüttgutkomponenten aus den jeweiligen Vorratsbehälter ist der Schüttgutbehälter 1,2 auf einer Druckmessdose 7 als Wägezelle gelagert.

Die Reinluftleitung 5 und das Materialeinlaufrohr 6 sind jeweils über elastische Manschetten 8 mit den äußeren Zuleitung für den Schüttgutbehälter 1,2 verbunden. Hinter der Auslaufklappe 3 befindet sich ebenfalls eine vergleichbare elastische Manschette 9, über die das Fördergerät elastisch mit einer Fallleitung verbunden ist, die zu einer Verarbeitungsmaschine, beispielsweise zu einem Extruder oder einer Kunststoffspritzgießmaschine führen kann.

Die Zu- und Abschaltung der einzelnen Schüttgutkomponenten (hier Kunststoffgranulat) der verschiedenen Vorratsbehälter geschieht in an sich bekannter Weise über Ventile 10, womit es möglich ist, mittels einer hier nicht dargestellten Dosiersteuerung exakte Materialmengen verschiedener Schüttgutmaterialkomponenten abzuwiegen. Für die Umsteuerung von einer Schüttgutkomponente zur nächsten, bzw. für einen später durchzuführenden Mischvorgang, ist ein Zusatzventil 11 für eine Leerlaufluftzufuhr vorgesehen.

Das Materialeinlaufrohr 6 wird bei diesem erfindungsgemäßen Ausführungsbeispiel in seiner im wesentlichen vertikalen Ausprägung von einem Außenrohr 12 in einem vorgegebenen Bereich konzentrisch umschlossen. Das Außenrohr 12 endet am unteren Ende bevorzugt mit einer konischen Erweiterung 13.

Die Arbeitsweise der oben beschriebenen Vorrichtung wird im Folgenden erläutert. Sollen gegebenenfalls zwei oder mehrere verschiedene Schüttgutkomponenten gefördert, verwogen und vermischt werden, so wird die erste Schüttgutkomponente durch Öffnen eines der Ventile 10 aus dem entsprechenden Vorratsbehälter so lange angesaugt und in den Schüttgutbehälter 1,2 gefördert bis das erforderliche Sollgewicht erreicht ist. Durch Schließen des entsprechenden Ventils 10 und bei gleichzeitigem Öffnen des Ventils 11 für die Leersaugung, wird die Verwiegung der ersten Schüttgutkomponente abgeschlossen.

Nach dem Fördern und Dosieren der ersten Schüttgutkomponente wird in gleicher Weise die zweite und gegebenenfalls jede weitere Schüttgutkomponente in den Schüttgutbehälter 1,2 eingefördert. Bereits beim Einfördern der einzelnen Schüttgutkomponenten werden diese jeweils miteinander vermischt, da beim Austritt aus dem Materialeinlaufrohr 6 bereits ständig das jeweils neue und das bereits im Schüttgutbehälter 1,2 befindliche Schüttgutmaterial untereinander vermischt wird.

Im hohlzylindrischen Bereich zwischen dem Materialeinlaufrohr 6 und dem Außenrohr 12 wird durch die oben beschriebene Saugfördereinrichtung ein Luftstrom erzeugt, durch den Schüttgutpartikel, die gerade eingefördert worden sind, im Bodenbereich mit bereits vorhandenen Schüttgutpartikeln vermischt werden. Diese Schüttgutpartikel strömen in den Spalt zwischen der konischen Erweiterung 13 und dem unteren konischen Behälterteil 2 in die Mischzone unterhalb der konischen Erweiterung 13 ein. Die vermischten Schüttgutpartikel werden vom Bodenbereich des Schüttgutbehälters 1,2 nach oben getragen und fallen oben wieder seitlich auf das vorhandene Schüttgut herunter, wodurch ein weiterer Mischeffekt erzielt wird.

Nach Abschluß des eigentlichen Fördervorganges für die einzelnen Schüttgutkomponenten, wenn alle Komponenten im Schüttgutbehälter 1,2 angelangt sind, kann der beschrieben Mischprozeß beliebig lange fortgesetzt werden, indem die Förderventile 10 geschlossen bleiben und über das Ventil 11 für die Leerlaufluft weiterhin Luft angesaugt wird.

### Bezugszeichenliste

- 1: = zylindrisches Oberteil des Schüttgutbehälters
- 2: = unteres konisches Teil des Schüttgutbehälters
- 3: = Auslaufklappe
- 4: = Filter
- 5: = Reinluftleitung der Saugfördereinrichtung
- 6: = Materialeinlaufrohr
- 7: = Wägezelle
- 8: = elastische Manschetten
- 9: = elastische Manschette
- 10: = Ventile
- 11: = Ventil
- 12: = Außenrohr
- 13: = konische Erweiterung des Außenrohrs 12

## Patentansprüche

1. Vorrichtung zum Fördern und Mischen von Schüttgut, bei der
- mittels einer Saugfördereinrichtung jeweils eine Schüttgutkomponente durch ein Materialeinlaufrohr (6) in den Bodenbereich eines Schüttgutbehälters (1,2) gelangt,
**dadurch gekennzeichnet, dass**
- das Materialeinlaufrohr (6) in einem vorgegebenen Bereich innerhalb des Schüttgutbehälters (1,2) mit einem Außenrohr (12) derart umgeben ist, dass zwischen dem Materialeinlaufrohr (6) und dem Außenrohr (12) eine Materialströmung des Schüttgutes vom Bodenbereich des Schüttgutbehälters (1,2) in Richtung der Saugfördereinrichtung bewirkbar ist.

2. Vorrichtung nach Anspruch 1, **dadurch gekennzeichnet, dass**
- das Materialeinlaufrohr (6) und das Außenrohr (12) im wesentlichen senkrecht und konzentrisch im Schüttgutbehälter (1,2) angeordnet sind.

3. Vorrichtung nach Anspruch 1 oder 2, **dadurch gekennzeichnet, dass**
- das Außenrohr (12) am Materialeinlaufrohr (6) in einem vorgegebenen Bereich axial verschiebbar ist.

4. Vorrichtung nach einem der vorhergehenden Ansprüche, **dadurch gekennzeichnet, dass**
- das Außenrohr (12) an seinem Ende im Bodenbereich des Schüttgutbehälters (1,2) eine konische Erweiterung (13) aufweist.

5. Vorrichtung nach einem der vorhergehenden Ansprüche, **dadurch gekennzeichnet, dass**
- die Saugintensität der Saugfördereinrichtung zur Einstellung der Mischintensität der im Schüttgutbehälter (1,2) befindlichen Schüttgutkomponenten veränderbar ist.

6. Vorrichtung nach einem der vorhergehenden Ansprüche, **dadurch gekennzeichnet, dass**
- der Schüttgutbehälter (1,2) auf einer Wägezelle (7) gelagert ist, über deren Messwerte unterschiedliche Schüttgutkomponenten in genau vorgegebenen Größen eingewogen werden können.

7. Vorrichtung nach einem der vorhergehenden Ansprüche, **dadurch gekennzeichnet, dass**
- die Saugfördereinrichtung am oberen Ende des Schüttgutbehälters (1,2) angeordnet ist und zwischen der Saugfördereinrichtung und dem zu dosierenden und zu mischenden Schüttgut ein Filter (4) geschaltet ist.

8. Anwendung der Vorrichtung nach einem der vorhergehenden Ansprüche, **dadurch gekennzeichnet, dass**
- die unterschiedlichen Schüttgutkomponenten nacheinander durch steuerbare Ventile (10) in das Materialeinlaufrohr (6) gefördert werden zwischen den Fördervorgängen der einzelnen Schüttgutkomponenten über ein Ventil (11) das Materialeinlaufrohr (6) mit Leerlaufluft versorgt wird.

9. Anwendung der Vorrichtung nach einem der vorhergehenden Ansprüche, **dadurch gekennzeichnet, dass**
- nach den Fördervorgängen für die Schüttgutkomponenten das Ventil (11) für die Leerlaufluft geöffnet bleibt und die Saugfördereinrichtung eine vorgegebene Zeitspanne in Betrieb gehalten wird.

10. Anwendung der Vorrichtung nach einem der vorhergehenden Ansprüche, **dadurch gekennzeichnet, dass**
- die Schüttgutkomponenten Kunststoffgranulat sind und der Auslauf des Schüttgutbehälters (1,2) mit einer Kunststoffspritzgießmaschine oder mit einem Extruder verbunden ist.
